# EUROPEAN PATENT APPLICATION

(11) **EP 4 668 453 A1**
(43) Date of publication of application: **24.12.2025**
(21) Application number: 24839984.2
(22) Date of filing: 03.07.2024
(51) Int. Cl.: H01M 50/383, H01M 50/342, H01M 50/367, H01M 50/249

(54) **BATTERY PACK AND VEHICLE INCLUDING SAME**

(30) Priority: 12.07.2023 KR 20230090610
(71) Applicant: LG Energy Solution, Ltd., Seoul 07335 (KR)
(72) Inventor: PARK, Jeong-Hoon, Daejeon 34122 (KR)
(74) Representative: Plasseraud IP
(86) International application number: PCT/KR2024/009390
(87) International publication number: WO 2025/014171

(57) **Abstract**

Disclosed are a battery pack and a vehicle including the same. The battery pack includes a plurality of battery modules in which a plurality of battery cells are stacked; a pack case configured to accommodate the plurality of battery modules; and a blocking cover configured to cover at least a portion of the battery module to be opened in a preset direction by flame or gas.

## Description

### TECHNICAL FIELD

The present application claims priority to Korean Patent Application No. 10-2023-0090610 filed on July 12, 2023 in the Republic of Korea, the disclosures of which are incorporated herein by reference.

The present disclosure relates to a battery pack and a vehicle including the same, and more specifically, to a battery pack capable of preventing propagation of flame or gas, and a vehicle including the same.

### BACKGROUND ART

As the technology development and demand for mobile devices increase, demand for secondary batteries as an energy source is rapidly increasing, and nickel cadmium batteries or hydrogen ion batteries have been used as conventional secondary batteries, but recently, lithium secondary batteries that have almost no memory effect compared to nickel-based secondary batteries, thereby having advantages such as free charging and discharging, very low self-discharge rate, and high energy density, are widely used.

These lithium secondary batteries mainly use a lithium-based oxide and a carbon material as a positive electrode active material and a negative electrode active material, respectively. Lithium secondary batteries include an electrode assembly in which a positive electrode plate and a negative electrode plate coated with the positive electrode active material and the negative electrode active material, respectively, are disposed with a separator therebetween, and an exterior material that seals and accommodates the electrode assembly together with an electrolyte, that is, a battery case.

Lithium secondary batteries are composed of a positive electrode, a negative electrode, a separator interposed therebetween and an electrolyte, and are classified into a lithium ion battery (LIB), a polymer lithium-ion battery (PLIB), and the like depending on what positive electrode active material and negative electrode active material are used. Typically, electrodes of these lithium secondary batteries may be formed by coating a positive electrode or negative electrode active material on a current collector, such as an aluminum or copper sheet, a mesh, a film, a foil, or the like, and then drying the same.

Lithium secondary batteries are currently in the spotlight due to their advantages such as high operating voltage and significantly high energy density. However, because they use organic electrolytes, overcharging of lithium secondary batteries may cause overcurrent and overheating, which may lead to explosion or ignition in severe cases.

Various types of secondary batteries include a battery module having a case for protecting battery cells, where a plurality of battery cells are stacked and inserted to the case, and a battery pack in which a plurality of battery modules are accommodated.

Here, when a flame occurs in at least one of the battery cells inside the battery module case, if the flame leaks out of the case of the battery module, the flame may spread to other battery modules, and the flame may also cause a dangerous situation for the user.

For example, when a battery module or battery pack is installed in an electric vehicle, if a flame is generated in the battery cell and the flame leaks out, the driver driving the electric vehicle may be burned or put in a dangerous situation.

Alternatively, if a flame generated from a certain battery module spreads to other neighboring battery modules in this way, the battery module or battery pack may be damaged, burned out, or explode due to a chain reaction of flames, so there is a problem that the stability of the battery module or battery pack cannot be secured. Also, gas is also generated from the battery cells inside the battery module, and thus various problems may occur if such gas is discharged in an undesirable direction.

### DISCLOSURE

### Technical Problem

Therefore, the present disclosure is directed to providing a battery pack that may discharge flame or gas, which is generated in any one battery module since a battery cell inside the corresponding battery module ignites, in a preset direction to prevent propagation of the flame to neighboring battery modules, thereby ensuring the stability of the battery module, and a vehicle including the battery pack.

### Technical Solution

In one aspect of the present disclosure, there is provided a battery pack, comprising: a plurality of battery modules in which a plurality of battery cells are stacked; a pack case configured to accommodate the plurality of battery modules; and a blocking cover configured to cover at least a portion of the battery module to be opened in a preset direction by flame or gas.

In an embodiment, the pack case may include a lower frame on which the plurality of battery modules are seated; a side frame extending upward from an edge of the lower frame; an inner frame extending upward from an inside of the lower frame and coupled to the side frame; a barrier frame coupled to the inner frame and interposed between the plurality of battery modules; and an upper frame separated from the inner frame and coupled to the side frame, and the blocking cover may be installed on the barrier frame.

In an embodiment, the blocking cover may include a first blocking part located at an upper side; and a second blocking part extending to be bent from the first blocking part.

In an embodiment, the second blocking part may be located to be spaced apart from the inner frame.

In an embodiment, a protrusion may be formed at an upper side of the barrier frame, a groove may be formed in the first blocking part of the blocking cover, and the protrusion of the barrier frame may be removably fitted into the groove of the first blocking part.

In an embodiment, the blocking cover may be opened by rotating between the upper frame and the inner frame as the groove of the first blocking part is separated from the protrusion of the barrier frame by the flame or the gas.

In an embodiment, the blocking cover may be formed in an L shape.

In an embodiment, the first blocking part may include a center portion configured to cover the battery module; and a wing portion located at both ends of the center portion and separated from the center portion.

In an embodiment, when the flame or the gas occurs, the center portion of the first blocking part may be opened upward by the flame or the gas.

In an embodiment, the first blocking part and the second blocking part may be formed in an integrated form, and a cut portion may be formed between the center portion and the wing portion of the first blocking part.

In an embodiment, the blocking cover may be made of mica.

In an embodiment, the battery pack may further comprise a flame gas guide channel member coupled to the battery module to guide the flame or the gas, which is discharged when the blocking cover is opened, in a preset direction.

In an embodiment, the flame gas guide channel member may have a hollow formed therein, and the flame or the gas may be discharged through the hollow inside the flame gas guide channel member.

In an embodiment, the side frame may have a hollow formed therein, and the flame gas guide channel member may be in communication with the side frame, and the flame or the gas may move from the flame gas guide channel member to the side frame and be discharged.

Meanwhile, in another aspect of the present disclosure, there is also provided a vehicle, comprising the battery pack described above.

### Advantageous Effects

Embodiments of the present disclosure have the effect of discharging flame or gas, which is generated in any one battery module since a battery cell inside the corresponding battery module ignites, in a preset direction to prevent propagation of the flame to neighboring battery modules.

Also, the present disclosure has the effect of ensuring the stability of the battery module.

In addition, the present disclosure has the effect of allowing easy assembly and reducing costs by eliminating a fastening member.

### DESCRIPTION OF DRAWINGS

FIG. 1 is a partially exploded perspective view showing a battery pack according to the first embodiment of the present disclosure.
FIG. 2 is a cross-sectional view showing a battery module included in the battery pack of FIG. 1.
FIG. 3 is an enlarged view showing part A of FIG. 1.
FIG. 4 is a partial plan view showing the battery pack according to the first embodiment of the present disclosure.
FIG. 5 is a diagram showing the battery module separated from a blocking cover in the battery pack according to the first embodiment of the present disclosure.
FIG. 6 is a diagram showing the inside of the blocking cover in the battery pack according to the first embodiment of the present disclosure.
FIG. 7 is a perspective view showing the blocking cover in the battery pack according to the first embodiment of the present disclosure.
FIGS. 8 and 9 are diagrams for illustrating a process in which the blocking cover is opened by a flame or gas so that the flame or gas is discharged in the battery pack according to the first embodiment of the present disclosure.
FIG. 10 is a drawing showing a blocking cover and a battery module in a battery pack according to the second embodiment of the present disclosure, and includes a partial enlarged view.
FIG. 11 is a perspective view showing the blocking cover in the battery pack according to the second embodiment of the present disclosure.
FIG. 12 is a diagram for illustrating a process in which the blocking cover is opened by a flame or gas so that the flame or gas is discharged in the battery pack according to the second embodiment of the present disclosure.
FIG. 13 is a diagram for illustrating a process in which the blocking cover is opened by a flame or gas so that the flame or gas is discharged in a battery pack according to the third embodiment of the present disclosure.
FIG. 14 is a drawing for illustrating a vehicle including the battery pack according to each embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

In the drawings, the size of each component or a specific portion constituting the component is exaggerated, omitted, or schematically illustrated for convenience and clarity of description. Therefore, the size of each component does not fully reflect the actual size. If it is determined that a detailed description of a related known function or configuration may unnecessarily obscure the gist of the present disclosure, such a description will be omitted.

As used herein, the term 'coupling' or 'connection' refers to not only a case where one member and another member are directly coupled or directly connected, but also a case where one member is indirectly coupled or indirectly connected to another member through a joint member.

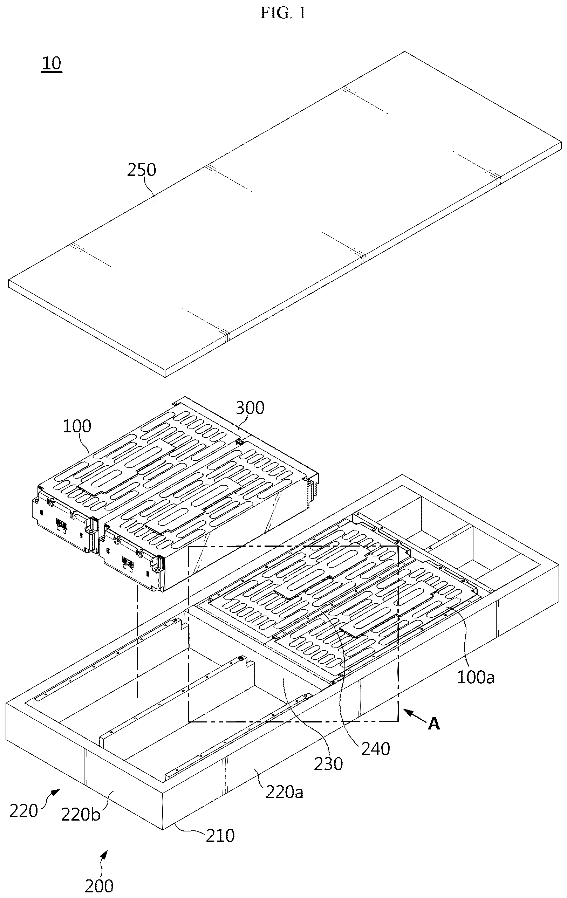

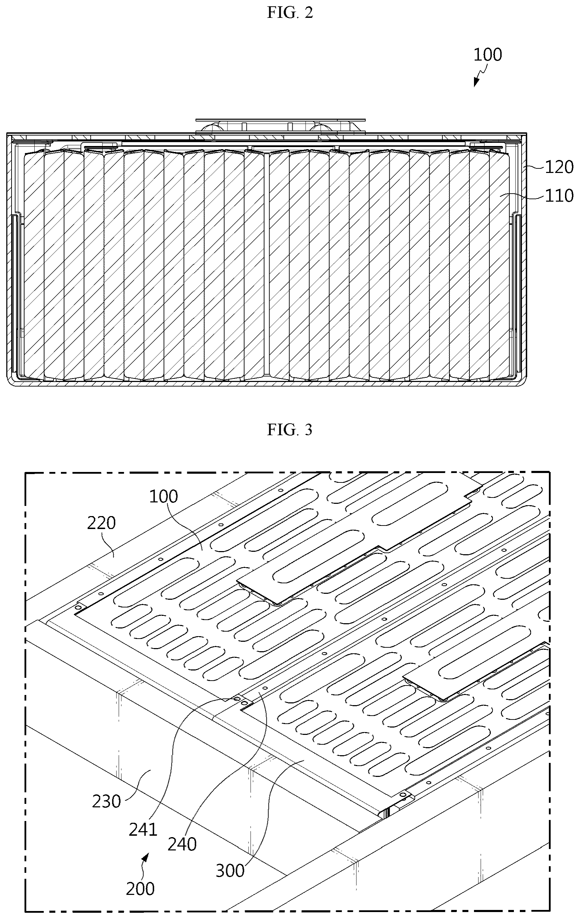

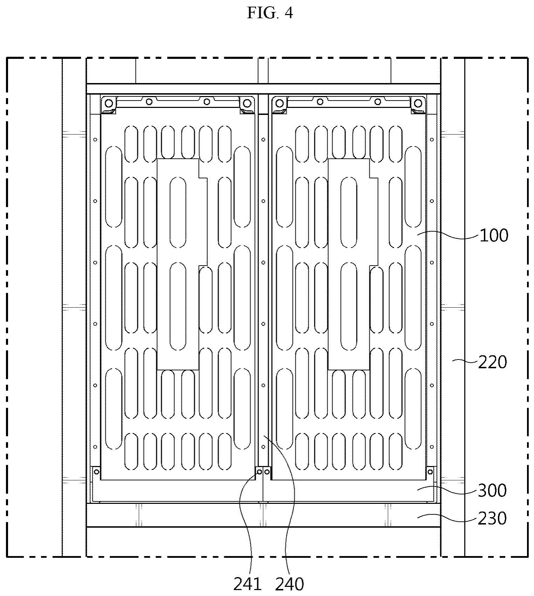

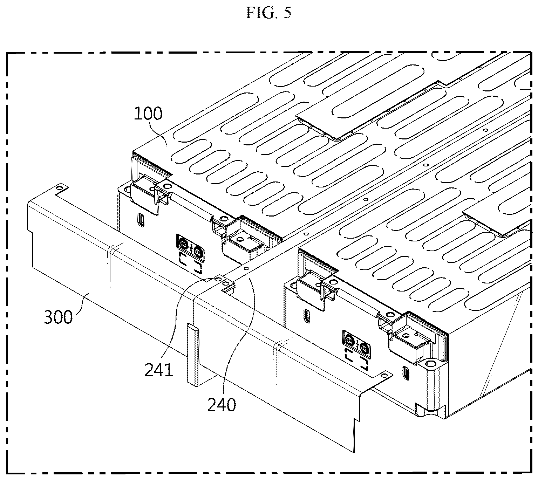

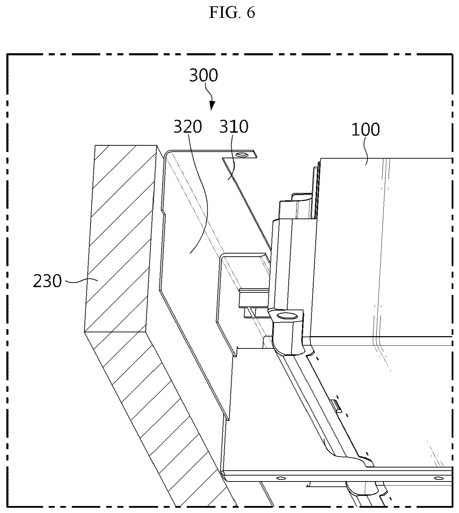

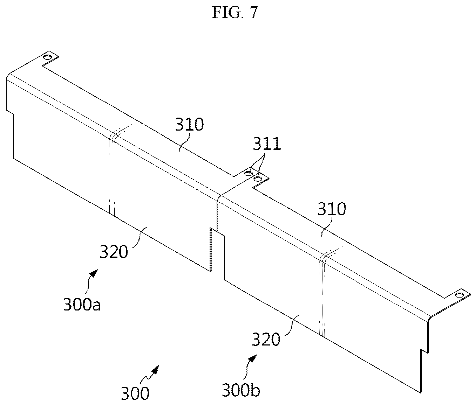

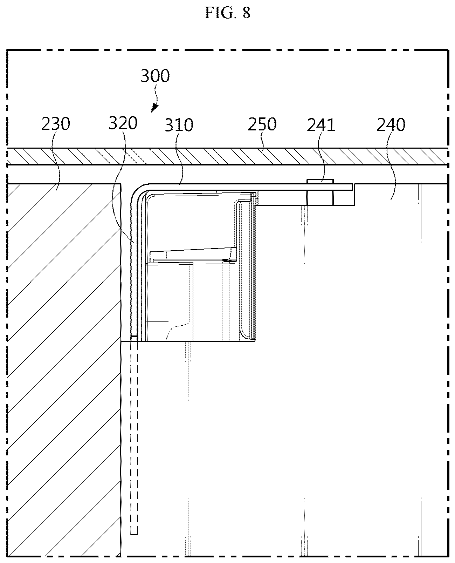

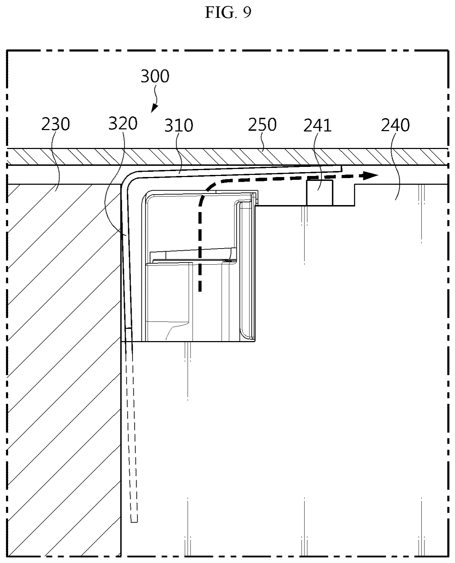

FIG. 1 is a partially exploded perspective view showing a battery pack according to the first embodiment of the present disclosure, FIG. 2 is a cross-sectional view showing a battery module included in the battery pack of FIG. 1, FIG. 3 is an enlarged view showing part A of FIG. 1, FIG. 4 is a partial plan view showing the battery pack according to the first embodiment of the present disclosure, FIG. 5 is a diagram showing the battery module separated from a blocking cover in the battery pack according to the first embodiment of the present disclosure, FIG. 6 is a diagram showing the inside of the blocking cover in the battery pack according to the first embodiment of the present disclosure, FIG. 7 is a perspective view showing the blocking cover in the battery pack according to the first embodiment of the present disclosure, and FIGS. 8 and 9 are diagrams for illustrating a process in which the blocking cover is opened by a flame or gas so that the flame or gas is discharged in the battery pack according to the first embodiment of the present disclosure.

Referring to FIG. 1, the battery pack 10 according to the first embodiment of the present disclosure may include a plurality of battery modules 100, a pack case 200, and a blocking cover 300.

A plurality of battery modules 100 are provided and arranged in various ways. For example, as shown in FIG. 1, the plurality of battery modules 100 may be arranged horizontally and vertically, but are not limited thereto.

Referring to FIG. 2, the battery module 100 may include a plurality of battery cells 110 and a module case 120.

The plurality of battery cells 110 may be stacked one another. The battery cell 110 may have various structures, and the plurality of battery cells 110 may be stacked in various ways.

The battery cell 110 may be configured in a structure in which a plurality of unit cells, in which a positive electrode plate, a separator, and a negative electrode plate are arranged in sequence, or a plurality of bi-cells, in which a positive electrode plate, a separator, a negative electrode plate, a separator, a positive electrode plate, a separator, and a negative electrode plate are arranged in sequence, is stacked according to the battery capacity.

The battery cell 110 may have an electrode lead. The electrode lead is a kind of terminal that is exposed to the outside and connected to an external device, and may be made of a conductive material. The electrode lead may include a positive electrode lead and a negative electrode lead.

The positive electrode lead and the negative electrode lead may be disposed at opposite sides with respect to the longitudinal direction of the battery cell 110, or the positive electrode lead and the negative electrode lead may be located at the same side with respect to the longitudinal direction of the battery cell 110.

Meanwhile, the battery cell 110 may have a plurality of cartridges (not shown) that accommodate the battery cells 110. Each cartridge (not shown) may be manufactured by plastic injection molding, and a plurality of cartridges (not shown) having a storage portion capable of storing the battery cells 110 may be stacked. A cartridge assembly in which a plurality of cartridges (not shown) is stacked may have connector elements or terminal elements.

The connector elements may include, for example, various types of electrical connection components or members for connection with a BMS (Battery Management System) (not shown) capable of providing data on the voltage or temperature of the battery cell 110 or the like.

In addition, the terminal elements are main terminals connected to the battery cell 110 and include a positive electrode terminal and a negative electrode terminal. The terminal element may have a terminal bolt to be electrically connected to the outside structure. Meanwhile, the battery cell 110 may have various shapes.

Referring to FIG. 2, a plurality of battery cells 110 are stacked and accommodated in the module case 120. The module case 120 surrounds the plurality of battery cells 110 and thus protects the battery cells 110 from external vibration or shock.

The module case 120 may be formed in a shape corresponding to the shape of the stack formed by stacking a plurality of battery cells 110. For example, if the stack formed by stacking a plurality of battery cells 110 has a hexahedral shape, the module case 120 may also be formed in a hexahedral shape to correspond thereto. However, the present disclosure is not limited thereto. Here, the module case 120 may include an upper module case, a lower module case, and a side module case.

In addition, the module case 120 may be manufactured, for example, by bending a metal plate, and as a result, the module case 120 may be manufactured as an integrated piece. If the module case 120 is manufactured as an integrated piece, the coupling process may be simplified and easy. Alternatively, the module case 120 may be configured as a separate type and coupled by welding or the like. However, the material of the module case 120 is not limited to metal.

Referring to FIG. 1, a plurality of battery modules 100 are accommodated in a pack case 200. The pack case 200 may include, for example, a lower frame 210, a side frame 220, an inner frame 230, a barrier frame 240, and an upper frame 250.

The lower frame 210 is configured so that the plurality of battery modules 100 are seated thereon. The lower frame 210 may be formed in a square plate shape, but is not limited thereto. The lower frame 210 forms the bottom of the pack case 200.

The side frame 220 may be configured to extend upward from the edge of the lower frame 210. The side frame 220 defines the height of the pack case 200 and forms a preset space between the side frame 220 and the lower frame 210. Also, a plurality of battery module 100 are seated in the space between the side frame 220 and the lower frame 210. The side frame 220 may include a long side frame 220a, which is relatively long, and a short side frame 220b, which is relatively short.

The inner frame 230 extends upward from the inside of the lower frame 210 and is coupled to the side frame 220. One or more inner frames 230 may be provided, and a plurality of battery modules 100 may be arranged to face each other based on the inner frame 230. The inner frame 230 is arranged in the same direction as the short side frame 220b.

Barrier frame 240 is coupled to the inner frame 230. Here, the barrier frame 240 is arranged in the same direction as the long side frame 220a. Also, the barrier frame 240 is interposed between the plurality of battery modules 100. In FIG. 1, one barrier frame 240 is disposed between two neighboring battery modules 100, but the present invention is not limited thereto. Here, referring to FIGS. 1 and 3, a blocking cover 300 is installed on the barrier frame 240.

The upper frame 250 is separated from the inner frame 230 and is coupled to the side frame 220. Referring to FIG. 8, a preset gap is formed between the upper frame 250 and the inner frame 230. In addition, a preset gap is also formed between the upper frame 250 and the barrier frame 240. As will be explained in detail later, flame or gas may be discharged through the gap between the upper frame 250 and the barrier frame 240.

The blocking cover 300 covers at least a portion of the battery module 100 to be opened in a preset direction by flame or gas. When the blocking cover 300 is opened by flame or gas, the flame or gas may be discharged in a preset direction through the open space of the blocking cover 300.

Referring to FIGS. 3 to 5, the blocking cover 300 is installed on the barrier frame 240. Here, the blocking cover 300 is installed on the barrier frame 240 without a fastening member. As will be explained later, the protrusion 241 of the barrier frame 240 is installed by being removably inserted into the groove 311 of the first blocking part 310 of the blocking cover 300 without a fastening member, which facilitates assembly and reduces costs.

Referring to FIGS. 6 and 7, the blocking cover 300 may include a first blocking part 310 and a second blocking part 320. The first blocking part 310 is located above the second blocking part 320 and covers at least a portion of the battery module 100 as shown in FIG. 3. Here, the blocking cover 300 may be located at the upper side of a bus bar, and a fireproof cover (not shown) that blocks the bus bar may be provided at the lower side of the blocking cover 300.

The second blocking part 320 extends to be bent from the first blocking part 310. The second blocking part 320 may be bent at an angle of 90 degrees from the first blocking part 310 and disposed between the inner frame 230 and the battery module 100. Referring to FIG. 8, at this time, the second blocking part 320 is located to be spaced apart from the inner frame 230. Meanwhile, the bending angle of 90 degrees between the second blocking part 320 and the first blocking part 310 is only one embodiment and is not limited thereto.

Referring to FIGS. 1 and 8, a protrusion 241 is formed on the upper side of the barrier frame 240. Also, referring to FIG. 7, a groove 311 is formed in the first blocking part 310 of the blocking cover 300. Also, as shown in FIG. 3, the protrusion 241 of the barrier frame 240 is removably inserted into the groove 311 of the first blocking part 310.

Here, when flame or gas is generated inside the battery cell 110, the blocking cover 300 rotates upward due to the flame or gas as shown in FIG. 9, and the groove 311 of the first blocking part 310 is separated from the protrusion 241 of the barrier frame 240. In other words, if the groove 311 of the first blocking part 310 is separated from the protrusion 241 of the barrier frame 240, the blocking cover 300 rotates between the upper frame 250 and the inner frame 230 to be opened, and the flame or gas may be discharged through the open gap of the blocking cover 300 between the upper frame 250 and the barrier frame 240 (see arrow in FIG. 9).

As described above, referring to FIG. 8, since the second blocking part 320 is located to be spaced apart from the inner frame 230 and the first blocking part 310 is located to be spaced apart from the upper frame 250, the blocking cover 300 may rotate between the upper frame 250 and the inner frame 230 by flame or gas.

In other words, if the blocking cover 300 rotates due to flame or gas, the upper frame 250 and the inner frame 230 function as a kind of stopper, so the blocking cover 300 may rotate only within a preset range. To explain this with reference to FIG. 9, when the blocking cover 300 rotates, the first blocking part 310 collides with the upper frame 250, and the second blocking part 320 collides with the inner frame 230, so further rotation is prevented. Therefore, the blocking cover 300 may rotate only within a preset range.

Referring to FIGS. 1 and 9, if the blocking cover 300 is opened by flame or gas as described above, the open gap of the blocking cover 300 is formed in a direction in which the battery module 100 where the flame or gas is generated is located.

That is, for example, if flame or gas occurs in the first battery module 100a (see FIG. 1), which is one of the plurality of battery modules 100, the open gap of the blocking cover 300 is formed in a direction toward the first battery module 100a, so the flame or gas generated in the first battery module 100a is discharged only to the first battery module 100a and is not discharged to other battery modules 100 where flame does not occur.

By this, when the battery cell 110 inside any one battery module 100 ignites so that flame or gas generated in the corresponding battery module 100, the flame or gas may be discharged in a preset direction (toward the corresponding battery module where the flame or gas is generated), so the present disclosure has the effect of preventing the flame or gas from propagation to neighboring battery modules 100.

Meanwhile, the blocking cover 300 may be formed in various shapes, for example, in an L shape as shown in FIG. 8, but the shape of the blocking cover 300 is not limited thereto.

The blocking cover 300 may be made of various materials, for example, mica, which is a fire-resistant material, but the material of the blocking cover 300 is not limited thereto.

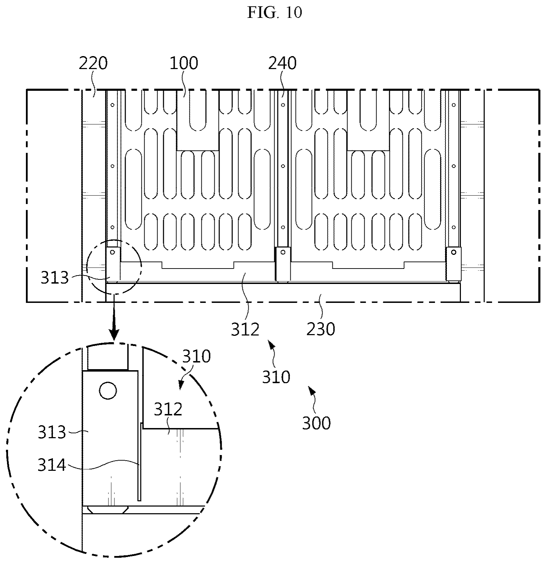

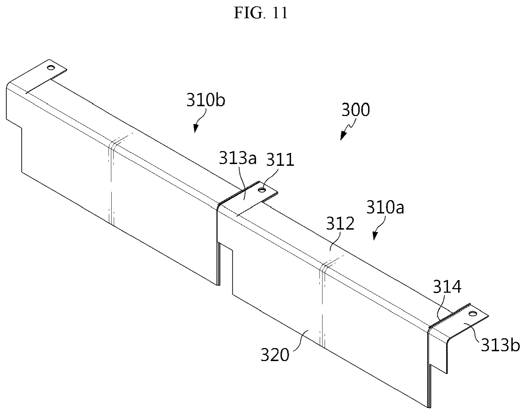

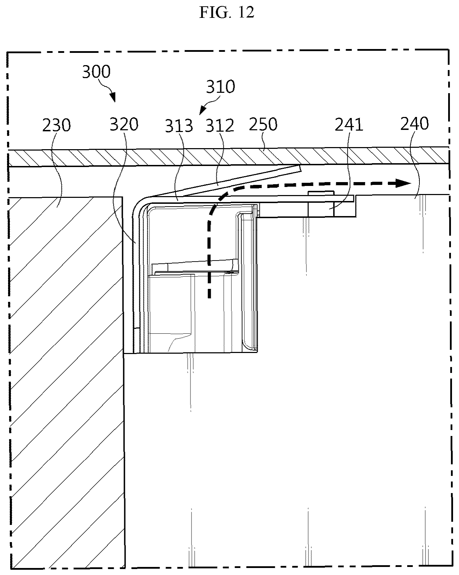

FIG. 10 is a drawing showing a blocking cover and a battery module in a battery pack according to the second embodiment of the present disclosure, and includes a partial enlarged view, FIG. 11 is a perspective view showing the blocking cover in the battery pack according to the second embodiment of the present disclosure, and FIG. 12 is a diagram for illustrating a process in which the blocking cover is opened by a flame or gas so that the flame or gas is discharged in the battery pack according to the second embodiment of the present disclosure.

The second embodiment is structurally different from the first embodiment in that in that a portion of the first blocking part 310 is separated, since the first blocking part 310 is not separated in the first embodiment. Here, features common to those of the first embodiment will not be described in detail again. Also, features of the second embodiment, which are applicable to the first embodiment, may be applied to the first embodiment.

Referring to FIGS. 10 and 11, the first blocking part 310 may include a center portion 312 and a wing portion 313. The center portion 312 covers the battery module 100 and is located in the center. Here, the center should be understood as a concept that includes not only the exact center but also locations close to the center. The wing portion 313 is located at both ends of the center portion 312 and is separated from the center portion 312.

Referring to the partially enlarged view of FIG. 10, a thin gap is formed by cutting between the center portion 312 and the wing portion 313, thereby separating the center portion 312 and the wing portion 313 from each other. That is, a cut portion 314 is formed between the center portion 312 and the wing portion 313 of the first blocking part 310. At this time, the first blocking part 310 and the second blocking part 320 are formed in an integrated form. That is, only the center portion 312 and wing portion 313 of the first blocking part 310 are separated from each other.

In addition, referring to FIGS. 10 and 11 together, two wing portions 313a and 313b are provided at the inner and outer sides, and the wing portions 313a at the inner side of the two first blocking parts 310a and 310b overlap each other and are installed at the protrusion 241 of the barrier frame 240.

Also, when flame or gas is generated in the battery module 100, the center portion 312 of the first blocking part 310 is opened upward by the flame or gas, as shown in FIG. 12. That is, in the first embodiment, the entire first blocking part 310 rotates and opens, but in the second embodiment, only the center portion 312 of the first blocking part 310 changes its shape and opens. At this time, the wing portion 313 of the first blocking part 310 keeps coupled to the protrusion 241 of the barrier frame 240. That is, the wing portion 313 maintains its original position, and the center portion 312 is lifted upward through the cut portion 314 and changes in shape. Also, the flame or gas may be discharged through the open gap in the center portion 312 between the upper frame 250 and the barrier frame 240 (see arrow in FIG. 12).

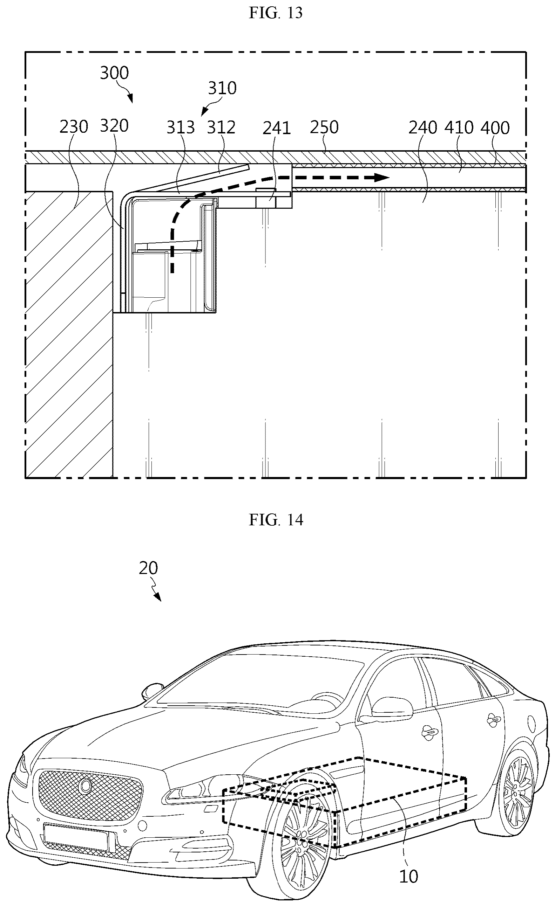

FIG. 13 is a diagram for illustrating a process in which the blocking cover is opened by a flame or gas so that the flame or gas is discharged in a battery pack according to the third embodiment of the present disclosure.

The third embodiment of the present disclosure is structurally different from the first or second embodiment in that a flame gas guide channel member 400 is provided. Here, features common to those of the first or second embodiment will not be described in detail again. Also, features of the third embodiment, which are applicable to the first or second embodiment, may be applied to the first or second embodiment.

Referring to FIG. 13, the flame gas guide channel member 400 is coupled to the battery module 100 to guide the flame or gas, which is discharged when the blocking cover 300 is opened, in a preset direction. Referring to FIG. 13, the flame gas guide channel member 400 has a hollow 410 formed therein. Also, when flame or gas is generated in any one battery module 100, the flame or gas is discharged through the hollow 410 inside the flame gas guide channel member 400.

For this purpose, the flame gas guide channel member 400 may be installed close to the first blocking part 310 of the blocking cover 300. In other words, if the first blocking part 310 is opened and the flame or gas is discharged through the open gap of the first blocking part 310, the flame or gas moves to the flame gas guide channel member 400 installed close to the first blocking part 310 and is discharged through the hollow 410 inside the flame gas guide channel member 400 (see arrow in FIG. 13). This allows the flame or gas to be discharged accurately in a preset direction.

In FIG. 13, the flame gas guide channel member 400 is provided for the second embodiment, but the flame gas guide channel member 400 may be provided for the first embodiment.

Meanwhile, although not shown in the drawing, in a modified embodiment, the interior of the side frame 220 may be formed in a hollow shape. Also, the flame gas guide channel member 400 is in communication with the side frame 220, and flame or gas may move from the flame gas guide channel member 400 to the inside of the side frame 220 and be discharged.

Alternatively, the inside of at least one of the lower frame 210, the side frame 220, the inner frame 230, the barrier frame 240, and the upper frame 250 of the pack case 200 is formed in a hollow shape and communicates with the flame gas guide channel member 400 to be used as a flow path through which the flame or gas may move.

FIG. 14 is a drawing for illustrating a vehicle including the battery pack according to each embodiment of the present disclosure.

Referring to FIG. 14, the vehicle 20 according to one embodiment of the present disclosure may include one or more battery packs 10 according to each of the above-described embodiments. Here, the vehicle 20 includes various vehicles designed to use electricity, such as electric vehicles or hybrid electric vehicles.

When the terms indicating directions as used herein such as upper, lower, left, and right are used for convenience of description only, these terms are just for convenience of explanation, and it is obvious to those skilled in the art that the terms may change depending on the position of the stated element or an observer.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description. Therefore, the previously disclosed embodiments should be considered from an explanatory perspective rather than a limiting perspective. In other words, the scope of the true technical idea of the present disclosure is shown in the claims, and all differences within the scope of equivalence should be interpreted as being included in the present disclosure.

### INDUSTRIAL APPLICABILITY

The present disclosure relates to a battery pack and a vehicle including them, and particularly, is available to industries related to secondary batteries.

## Claims

1. A battery pack, comprising:
a plurality of battery modules in which a plurality of battery cells are stacked;
a pack case configured to accommodate the plurality of battery modules; and
a blocking cover configured to cover at least a portion of the battery module to be opened in a preset direction by flame or gas.

2. The battery pack according to claim 1,
wherein the pack case includes:
a lower frame on which the plurality of battery modules are seated;
a side frame extending upward from an edge of the lower frame;
an inner frame extending upward from an inside of the lower frame and coupled to the side frame;
a barrier frame coupled to the inner frame and interposed between the plurality of battery modules; and
an upper frame separated from the inner frame and coupled to the side frame,
wherein the blocking cover is installed on the barrier frame.

3. The battery pack according to claim 2,
wherein the blocking cover includes:
a first blocking part located at an upper side; and
a second blocking part extending to be bent from the first blocking part.

4. The battery pack according to claim 3,
wherein the second blocking part is located to be spaced apart from the inner frame.

5. The battery pack according to claim 4,
wherein a protrusion is formed at an upper side of the barrier frame,
wherein a groove is formed in the first blocking part of the blocking cover, and
wherein the protrusion of the barrier frame is removably fitted into the groove of the first blocking part.

6. The battery pack according to claim 5,
wherein the blocking cover is opened by rotating between the upper frame and the inner frame as the groove of the first blocking part is separated from the protrusion of the barrier frame by the flame or the gas.

7. The battery pack according to claim 3,
wherein the blocking cover is formed in an L shape.

8. The battery pack according to claim 3,
wherein the first blocking part includes:
a center portion configured to cover the battery module; and
a wing portion located at both ends of the center portion and separated from the center portion.

9. The battery pack according to claim 8,
wherein when the flame or the gas occurs, the center portion of the first blocking part is opened upward by the flame or the gas.

10. The battery pack according to claim 8,
wherein the first blocking part and the second blocking part are formed in an integrated form, and
wherein a cut portion is formed between the center portion and the wing portion of the first blocking part.

11. The battery pack according to claim 1,
wherein the blocking cover is made of mica.

12. The battery pack according to claim 2, further comprising:
a flame gas guide channel member coupled to the battery module to guide the flame or the gas, which is discharged when the blocking cover is opened, in a preset direction.

13. The battery pack according to claim 12,
wherein the flame gas guide channel member has a hollow formed therein, and the flame or the gas is discharged through the hollow inside the flame gas guide channel member.

14. The battery pack according to claim 13,
wherein the side frame has a hollow formed therein, and
wherein the flame gas guide channel member is in communication with the side frame, and the flame or the gas moves from the flame gas guide channel member to the side frame and is discharged.

15. A vehicle, comprising the battery pack according to any one of claims 1 to 14.
